# EUROPÄISCHE PATENTANMELDUNG

(11) **EP 1 561 880 A1**
(43) Veröffentlichungstag der Anmeldung: **10.08.2005**
(21) Anmeldenummer: 04002768.2
(22) Anmeldetag: 09.02.2004
(51) Int. Cl.: E04F 15/10, C08L 75/04

(54) **Flächiges Belagsmaterial aus gefülltem thermoplastischen Polyurethan-Elastomer**

(71) Anmelder: FORBO-GIUBIASCO SA, 6512 Giubiasco (CH)
(72) Erfinder: Manso, Elvio, CH-6512 Giubiasco (CH); Guidotti, Bruno, CH-6528 Camorino (CH)
(74) Vertreter: Patentanwälte Schaad, Balass, Menzl & Partner AG

(57) **Zusammenfassung**

Die vorliegende Erfindung betrifft ein flächiges Belagsmaterial, das einen thermoplastischen Kunststoff und Füllstoffe enthält. Der thermoplastische Kunststoff ist dabei ein thermoplastisches Polyurethan-Elastomer, dessen Menge mindestens 5 Gew.% des gesamten Belagsmaterials beträgt. Das flächige Belagsmaterial wird vorzugsweise als Nutzbelag, insbesondere als Bodenbelag verwendet.

## Beschreibung

Die Erfindung betrifft ein flächiges Belagsmaterial für Bodenbeläge, das einen oder mehrere thermoplastische Kunststoffe und einen oder mehrere Füllstoffe enthält.

Flächige Belagsmaterialien, die Kunststoff enthalten, werden hauptsächlich in Innenräumen als Wand-, Boden- und Nutzbeläge verwendet. Sie werden in Form von Platten oder Bahnen hergestellt und verlegt.

In WO 97/42260 wird ein flächiges Belagsmaterial beschrieben, das einen thermoplastischen Kunststoff und ein Flexibilisierungsmittel enthält, wobei das Flexibilisierungsmittel weitere thermoplastische Kunststoffe, Polymere und Phthalate umfasst. Der thermoplastische Kunststoff ist ein amorphes Copolymerisat von Terephthalsäure mit Ethylenglykol und einem substituierten Dialkohol. Als Flexibilisierungsmittel wurde unter anderem ein Styrol/Butadien/Styrol-Copolymer (SBS) eingesetzt. Dieses in der WO 97/42260 beschriebene Belagsmaterial stellt eine gute Alternative zu PVC-Belägen dar. Bei der Herstellung des Belagsmaterials unter Standardbedingungen wurde jedoch festgestellt, dass eine Versprödung stattfindet, die die Qualität des Endproduktes stark beeinträchtigt. Um das Problem zu umgehen wurde ein äusserst aufwendiges, kostenintensives aber schonendes Verfahren eingesetzt, sodass die Versprödung unterblieben ist.

Überdies machten sich die in WO 97/42260 beschriebenen Paraffinöle und Phthalate, die ebenfalls als Flexibilisierungsmittel eingesetzt wurden, durch Migration, auch als sogenanntes Ausschwitzen bezeichnet an die Oberfläche des Belagsmaterials negativ bemerkbar. Infolge des Ausschwitzens entstand ein Oberflächenbelag, der eine Verklebung mit herkömmlichen handelsüblichen Klebstoffen verunmöglichte. Eine solche war nur mit speziellen Qualitäten möglich. Zur Herstellung der Belagsplatten wird das Ausgangsmaterial zu einem Block verpresst, der anschliessend schichtweise geschnitten wird. Dabei wurde festgestellt, dass das Belagsmaterial bei den für den Schneidprozess erforderlichen Temperaturen besonders anfällig auf bleibende Deformation ist.

Aufgabe der vorliegenden Erfindung war es nun, ein flächiges Belagsmaterial bereitzustellen, das einfach herzustellen ist. Überdies soll es resistent sein gegen Deformationen, die durch thermische Beanspruchung während des Schneidprozesses entstehen.

Die Aufgabe wird durch die Merkmale gemäss Anspruch 1 gelöst. Bevorzugte Ausführungsformen der Erfindung sind Gegenstand der abhängigen Ansprüche, auf die hier Bezug genommen wird.

Der Gehalt von mindestens 5 Gew.% eines thermoplastischen Polyurethan-Elastomers führt dazu, dass flächige Belagsmaterialien auf bestehenden Anlagen hergestellt werden können. Die Ausgangsmaterialien werden zu einem Block unter Wärmeeinwirkung verpresst, der anschliessend schichtweise zu Belagsplatten geschnitten wird. Der Pressvorgang kann in einem grossen Shore D-Härtebereich durchgeführt werden, ohne dass es zu einer Versprödung des Blocks oder der Belagsplatten kommt. Der für die schonende Verarbeitung erforderliche Mehraufwand, der in Anwesenheit des Styrol/Butadien/Styrol Copolymers notwendig war, kann vermieden werden. Damit wird das Herstellungsverfahren schneller und billiger. Durch die Eigenschaften des thermoplastischen Polyurethan-Elastomers kann auf Paraffinöl und Phthalate ganz oder teilweise verzichtet werden. Dies hat zur Folge, dass ein Ausschwitzen der Substanzen, das heisst, eine Migration an die Oberfläche der fertigen Belagsplatte, unterbleibt.

Überraschenderweise wurde festgestellt, dass der mit dem erfindungsgemässen Belagsmaterial hergestellte Block eine sehr hohe Temperaturtoleranz für den Schneidvorgang aufweist, da das Belagsmaterial reversibel verformt wird.

Das erfindungsgemässe Belagsmaterial enthält die erwünschten mechanischen Eigenschaften wie ausreichende Flexibilität und Elastizität. Überdies quietscht das geruchsneutrale Belagsmaterial beim Begehen nicht. Dadurch wird es besonders bevorzugt im Innenbereich verwendet, beispielsweise in Spitälern und in Büroräumen.

In einer bevorzugten Ausführungsart ist der im flächigen Belagsmaterial enthaltene Füllstoff ausgewählt aus der Gruppe von Calciumcarbonat, beschichtetem Calciumcarbonat, Titandioxid, Aluminiumsilikat, Kaolin. Talk und Aluminiumhydroxid oder Mischungen davon.

In einer besonders bevorzugten Ausführungsform weist das flächige Belagsmaterial neben dem thermoplastischen Polyurethan-Elastomer und dem Füllstoff mindestens einen weiteren thermoplastischen Kunststoff auf, der eine Trägerfunktion ausübt, indem er die mechanischen Eigenschaften in einem weiten Temperaturbereich reguliert, und mit dem thermoplastischen Polyurethan-Elastomer kompatibel ist. Vorzugsweise ist ein solcher thermoplastischer Kunststoff zumindest teilweise amorph. Ein amorphes Polykondensat aus Terephthalsäure mit zwei Glykolen hat sich als besonders geeignet erwiesen, da damit erwünschte Eigenschaften bezüglich Kompatibilität mechanischem Verhalten und chemischer Beständigkeit erreicht worden sind. Bevorzugt sind die Glykole ausgewählt aus der Gruppe von Ethylenglykol und Cyclohexandimethanol oder ähnlichen Glykolen.

Um die Ausgangsmaterialien besser verarbeiten zu können und die Qualität der Endprodukte zu erhöhen, können dem Belagsmaterial überdies Hilfsmittel wie Gleitmittel, Antistatika, UV-Schutzmittel und Mischungen davon zugegeben werden.

Bevorzugte Gleitmittel sind zum Beispiel Calciumstearat, Polyester langkettiger Fettsäuren oder Ölsäureamid. Auch kommen solche auf Polymethylacrylatbasis in Frage.

Für einen besseren Langzeitschutz haben sich UV-Schutzmittel wie sterisch gehinderte Aminlichtstabilisatoren (HALS) oder Benzotriazol-UV-Absorber und phenolische Antioxydantien als besonders wirksam erwiesen.

In einer besonders bevorzugten Ausführungsform enthält das flächige Belagsmaterial 5 bis 50 Gew.% des thermoplastischen Polyurethanelastomers, bis zu 25 Gew.% des Polykondensates von Terephthalsäure mit Ethylenglykol, 40 bis 70 Gew.% Füllstoffe und 1 bis 5 Gew.% Hilfsmittel.

In einer weiteren bevorzugten Ausführungsform enthält das flächige Belagsmaterial leitfähige Substanzen. Solche sind in EP 0869217 beschrieben, auf die hier Bezug genommen wird. Elektrisch leitende Belagsmaterialien sind besonders für den Einsatz in Laboratorien, EDV-Räumen und Operationssälen geeignet.

Mit dem Einsatz geeigneter Pigmente ist es möglich, eine dem Anwendungszweck angepasste Variation von Farben und Dessinstrukturen im Belagsmaterial zu erzielen.

Zur Herstellung des flächigen Belagsmaterials wird das Polyurethan-Elastomer und gegebenenfalls weitere thermoplastische Kunststoffe, die in Form von Granulaten, Chips oder Schnitzel vorliegen können, sowie Füllstoffe vermengt und bei erhöhter Temperatur verpresst. Die Granulate, Chips oder Schnitzel weisen gegebenenfalls einen leitfähigen Überzug auf. Nach dem Verpressen wird ein näherungsweise homogener Block erhalten. Falls Partikel mit leitfähigem Überzug eingesetzt wurden, ist der Block von gleichmässig verteilten dünnen leitfähigen Schichten durchsetzt. Der Block wird anschliessend in Einzelplatten gespalten, die je nach Anwendungsart noch bearbeitet, beispielsweise geschliffen werden können. Im Gegensatz zu Einzelplatten mit Styrol-Butadien-Copolymerisatien, deren Material auf dem Schleifpapier kleben blieb, was zum häufigen Ersetzen denselben führte, lässt sich die Oberfläche des erfindungsgemässen Belagsmaterials ausgesprochen gut schleifen, ohne dass Schleifpapier an der Oberfläche hängen bleibt. Dadurch kann das Belagsmaterial schneller bearbeitet werden und der Herstellungsprozess muss seltener unterbrochen werden. Da für das erfindungsgemässe Belagsmaterial geeignete Pressparameter (beispielsweise 25', 150°C bis 170°C bei 45 bar; 20', 1000°C-120°C bei 45 bar) angewendet werden können, bei denen das Fliessverhalten der Chips während des Verpressprozesses im Block konstant gehalten wird, werden die spezifikationskonformen elektrischen Widerstandswerte für alle Einzelplatten erreicht. Als geeignete Pressparameter können beispielsweise die folgenden angewendet werden: 25 Minuten bei 150°-170°C und 45 bar, 20 Minuten bei 100°-120°C und 45 bar. In einer besonders bevorzugten Ausführungsart werden die Einzelplatten mit einem leitenden Netzaufdruck versehen, wie dies in EP-A-0869217 beschrieben wird.

Das erfindungsgemässe Belagsmaterial lässt sich sehr einfach verkleben beispielsweise mit den handelsüblichen Acrylharzdispersionsklebern. Überdies wurde überraschenderweise festgestellt, dass die Verlegung des erfindungsgemässen Belagsmaterials weitgehend unabhängig von der Umgebungstemperatur ist. Das heisst, dass die Belagsplatten sowohl im Winter als auch im Sommer sowie bei den unterschiedlichsten klimatischen Bedingungen problemlos verlegt werden können.

Das erfindungsgemässe flächige Belagsmaterial wird vorzugsweise als Nutzbelag, insbesondere als Bodenbelag, verwendet. Es kann aber auch gut in Sportanlagen eingesetzt werden.

### Beispiele

Die nachfolgenden Beispiele zeigen Zusammensetzungen des erfindungsgemässen Belagsmaterials. Die Belagsmaterialien mit den Zusammensetzungen der Beispiele 3 und 7 haben sich als besonders geeignet herausgestellt.

| **Beispiel 1** | **Massen- anteil** | **%-Anteil** |
|---|---|---|
| PETG (Eastar 6763 der Firma Eastman) | 0.0 | 0.0 |
| Thermoplastisches | | |
| Polyurethan-Elastomer | | |
| (Elastollan Typ S der Firma Elastogran GmbH bestehend aus einem Polyurethanblock | | |
| (Hartsegment) und einem Polyesterblock Weichsegment)) | 46.9 | 44.0 |
| Füllstoff: Calciumcarbonat mit mindestens 4.75% Titandioxid | 57.2 | 53.7 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 2.3 | 2.2 |
| Pigment (Farbmasterbatchgranulate) | 0.1 | 0.1 |
| **Total** | 106.5 | 100.0 |
| Shore D 23°C | | 43 |
| E-Modul aus Zugversuch 23°C | | 102 |
| Dehnung aus Zugversuch 23°C | | 770 |

| | | |
|---|---|---|
| **Beispiel 2** | | |
| PETG (Eastar 6763 der Firma Eastman) | 20.4 | 19.2 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 26.5 | 24.9 |
| Füllstoff: Calciumcarbonat mit mindestens 4.75% Titandioxid | 57.2 | 53.7 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und | | |
| Benzotriazol-UV-Absorber (Tinuvine der Firma Ciba SC)) | 2.3 | 2.2 |
| Pigment (Farbmasterbatchgranulate) | 0.1 | 0.1 |
| **Total** | 106.5 | 100.0 |
| Shore D 23°C | | 64 |
| E-Modul aus Zugversuch 23°C | | 900 |
| Dehnung aus Zugversuch 23°C | | 550 |

| | | |
|---|---|---|
| **Beispiel 3** | | |
| PETG (Eastar 6763 der Firma Eastman) | 23.0 | 21.6 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 23.9 | 22.4 |
| Füllstoff: Calciumcarbonat mit mindestens 4.75% Titandioxid | 57.2 | 53.7 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 2.3 | 2.2 |
| Pigment (Farbmasterbatchgranulate) | 0.1 | 0.1 |
| Total | 106.5 | 100.0 |
| Shore D 23°C | | 69 |
| E-Modul aus Zugversuch 23°C | | 1300 |
| Dehnung aus Zugversuch 23°C | | 400 |

| | | |
|---|---|---|
| **Beispiel 4** | | |
| PETG (Eastar 6763 der Firma Eastman) | 25.9 | 24.3 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 21.0 | 19.7 |
| Füllstoff: Calciumcarbonat mit mindestens 4.75% Titandioxid | 57.2 | 53.7 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 2.3 | 2.2 |
| Pigment (Farbmasterbatchgranulate) | 0.1 | 0.1 |
| **Total** | 106.5 | 100.0 |
| Shore D 23°C | | 71 |
| E-Modul aus Zugversuch 23°C | | 1650 |
| Dehnung aus Zugversuch 23°C | | 270 |

| | | |
|---|---|---|
| **Beispiel 5** | | |
| PETG (Eastar 6763 der Firma Eastman) | 0.0 | 0.0 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 31.2 | 30.7 |
| Füllstoff: Calciumcarbonat mit mindestens | | |
| 4.75% Titandioxid | 68.1 | 66.9 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 2.3 | 2.3 |
| Pigment (Farbmasterbatchgranulate) | 0.1 | 0.1 |
| **Total** | 101.7 | 100.0 |
| Shore D 23°C | | 48 |
| E-Modul aus Zugversuch 23°C | | 110 |
| Dehnung aus Zugversuch 23°C | | 880 |

| | | |
|---|---|---|
| **Beispiel 6** | | |
| PETG (Eastar 6763 der Firma Eastman) | 17.6 | 17.3 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 18.5 | 18.2 |
| Füllstoff: Calciumcarbonat mit mindestens 4.75% Titandioxid | 62.2 | 60.2 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 4.2 | 4.1 |
| Pigment (Farbmasterbatchgranulate) | 0.1 | 0.1 |
| **Total** | 101.6 | 100.0 |
| Shore D 23°C | | 71.5 |
| E-Modul aus Zugversuch 23°C | | 890 |
| Dehnung aus Zugversuch 23°C | | 170 |

| | | |
|---|---|---|
| **Beispiel 7** | | |
| PETG (Eastar 6763 der Firma Eastman) | 21.4 | 21.1 |
| Thermoplastisches Polyurethan-Elastomer (Elastollan Typ S der Firma Elastogran GmbH bestehend aus einem Polyurethanblock (Hartsegment) und einem Polyesterblock Weichsegment)) | 23.1 | 22.7 |
| Füllstoff: Calciumcarbonat mit mindestens 4.75% Titandioxid | 52.9 | 52.1 |
| Hilfsmittel wie Gleitmittel (Calciumstearat), Antistatikum (Statexan der Firma Rheinchemie Rheinau GmbH) und UV-Schutzmittel (Gemisch aus gehinderten Aminlichtstabilisatoren (HALS)und Benzotriazol-UV-Absorber (Tinuvine der Firma Ciba SC)) | 4.1 | 4.0 |
| Pigment (Farbmasterbatchgranulate) | 0.1 | 0.1 |
| **Total** | 101.6 | 100.0 |
| Shore D 23°C | | 68.6 |
| E-Modul aus Zugversuch 23°C | | 800 |
| Dehnung aus Zugversuch 23°C | | 400 |

## Patentansprüche

1. Flächiges Belagsmaterial, enthaltend einen thermoplastischen Kunststoff und Füllstoffe, **dadurch gekennzeichnet, dass** der thermoplastische Kunststoff ein thermoplastisches Polyurethan-Elastomer ist, dessen Menge mindestens 5 Gew.% des gesamten Belagsmaterials beträgt.

2. Flächiges Belagsmaterial nach Anspruch 1, wobei der Füllstoff ausgewählt ist aus der Gruppe von Calciumcarbonat, Titandioxid, Silikaten, Kaolin und Aluminiumhydroxid oder Mischungen davon.

3. Flächiges Belagsmaterial nach Anspruch 1 oder 2, wobei es zusätzlich zu dem thermoplastischen Polyurethan-Elastomer mindestens einen weiteren thermoplastischen Kunststoff enthält, der mit dem Polyurethan-Elastomer kompatibel ist.

4. Flächiges Belagsmaterial nach Anspruch 3, wobei der weitere thermoplastische Kunststoff amorph ist.

5. Flächiges Belagsmaterial nach Anspruch 3 oder 4, wobei der zusätzlich zu dem thermoplastischen Polyurethan-Elastomer enthaltene weitere thermoplastische Kunststoff ein Polykondensat von Terephthalsäure mit zwei Glykolen ist.

6. Flächiges Belagsmaterial nach Anspruch 3 oder 4, wobei der zusätzlich zu dem thermoplastischen Polyurethan-Elastomer enthaltene, weitere thermoplastische Kunststoff ein Polykondensat von Terephtalsäure mit Ethylenglykol ist und in einer Menge von 25 Gew.% vorliegt.

7. Flächiges Belagsmaterial nach einem der vorangehenden Ansprüche, wobei es ein Hilfsmittel enthält.

8. Flächiges Belagsmaterial nach Anspruch 5, wobei das Hilfsmittel ausgewählt ist aus der Gruppe von Gleitmitteln, Antistatika und UV-Schutzmitteln oder Mischungen davon.

9. Flächiges Belagsmaterial nach einem der Ansprüche 3 bis 8, enthaltend 5 bis 50 Gew. % thermoplastisches Polyurethan-Elastomer, 40 bis 70 Gew. % Füllstoffe und 1 bis 5 Gew.% Hilfsmittel.

10. Verfahren zur Herstellung des flächigen Belagsmaterials nach einem der vorangehenden Ansprüche durch Vermengen und Verpressen unter Wärmeeinfluss des Ausgangsmaterials zu einem Block und schichtweises Schneiden des Blockes zu dem flächigen Belagsmaterial.

11. Verwendung des flächigen Belagsmaterials gemäss einem der Ansprüche 1 bis 9 als Bodenbelag oder Nutzbelag.
